# EUROPÄISCHE PATENTSCHRIFT

(11) **EP 3 682 974 B1**
(45) Veröffentlichungstag und Bekanntmachung des Hinweises auf die Patenterteilung: **19.03.2025**
(21) Anmeldenummer: 19152086.5
(22) Anmeldetag: 16.01.2019
(51) Int. Cl.: B05C 5/02, F16K 41/10

(54) **VORRICHTUNG ZUM AUSGEBEN EINES FLIESSFÄHIGEN MEDIUMS**
DEVICE FOR OUTPUTTING A FLOWABLE MEDIUM
DISPOSITIF DE DISTRIBUTION D'UN MILIEU FLUIDE

(43) Veröffentlichungstag der Anmeldung: 22.07.2020
(73) Patentinhaber: Robatech AG, 5630 Muri (CH)
(72) Erfinder: Ineichen, Beatus, 6353 Weggis (CH)
(74) Vertreter: Franke, Markus

(56) Entgegenhaltungen:
- DE-U1- 20 202 381
- US-A- 4 798 314
- US-A1- 2017 333 923
- US-B1- 6 343 721

## Beschreibung

Die vorliegende Erfindung betrifft eine Vorrichtung zum Ausgeben eines fließfähigen Mediums, wobei es sich bei dem fließfähigen Medium vorzugsweise um einen Klebstoff, insbesondere einen Heißkleber oder Schmelzklebstoff handelt.

Derartige Vorrichtungen werden zum Beispiel dafür verwendet, portionsweise fließfähiges Medium auf ein Substrat aufzubringen. Die Auftragung des fließfähigen Mediums erfolgt dabei gesteuert, wobei die Vorrichtung eine Ausgabeöffnung zum Ausgeben des fließfähigen Mediums aufweist, wobei diese Ausgabeöffnung mittels eines Dichtabschnitts einer mit einem Aktuator bewegbaren Stange geschlossen und geöffnet werden kann. Insofern weist die Vorrichtung ein verschließbares Ventil auf.

Vorrichtungen zum Ausgeben eines fließfähigen Mediums sind beispielsweise aus der DE 10 2015 000 630 B3, der EP 2 308 602 B1, der US 7 617 955 B2 und der US 8 333 307 B2 bekannt.

Hinsichtlich der Vorrichtungen zum Ausgeben eines fließfähigen Mediums der vorgenannten Art besteht eine besondere Problematik darin, zu verhindern, dass das fließfähige Medium in den Bereich des Aktuators gelangt. Um den Aktuator gegenüber dem fließfähigen Medium, insbesondere einer das fließfähige Medium aufnehmenden Kavität abzudichten, werden Dichtungen verwendet, wobei zu diesem Zweck grundsätzlich zwei unterschiedliche Arten von Dichtungen bekannt sind.

Zum einen eine sogenannte "dynamische Dichtung", wobei bei einer "dynamischen Dichtung" beim Betrieb der Vorrichtung die Dichtung bzw. das Dichtelement zwischen zwei sich relativ zueinander bewegenden Oberflächen ausgebildet bzw. angeordnet ist. Ein Nachteil bei dieser Art der Abdichtung ist, dass beim Langzeitbetrieb der Vorrichtung die dynamische Dichtung abgenutzt wird und infolge dessen die Dichtung ihre Dichtwirkung verliert, wodurch es zu ungewünschtem Eindringen von fließfähigem Medium in den Bereich des Aktuators kommen kann.

Des Weiteren sind aus dem Stand der Technik sogenannte "Balgdichtungen" bekannt. Im Gegensatz zu einer dynamischen Dichtung erfolgt bei einer Balgdichtung die Abdichtung nicht zwischen zwei sich gegeneinander bewegenden Flächen, sondern die Balgdichtung ist mit einem ersten Abschnitt mit dem Stangenelement statisch verbunden und mit einem zweiten Abschnitt statisch mit einem weiteren Element der Vorrichtung verbunden, wobei sich die Stange relativ zu dem zweiten Element der Vorrichtung bewegt. Die Bewegung der Stange gegenüber dem Element der Vorrichtung wird durch eine Verformung der Balgdichtung aufgenommen. Hierdurch ist eine sehr hohe Dichtheit auch bei einem Langzeitbetrieb der Vorrichtung gewährleistet, da an der Dichtung nur geringe Reibungskräfte auftreten.

Vorrichtungen zum Ausgeben eines fließfähigen Mediums, welche zwecks Abdichtung eines Aktuators eine Balgdichtung aufweisen, sind beispielsweise aus der DE 10 2015 000 630 B3, der EP 2 308 602 B1, der US 7 617 955 B2 sowie der US 8 333 307 B2 bekannt. Dabei weist die EP 2 308 602 B1 die Merkmale des Oberbegriffs des Patentanspruchs 1 auf. Konkret weist die Vorrichtung einen Kopfabschnitt und einen Grundkörperabschnitt auf, wobei die Vorrichtung eine Kavität zur Aufnahme des fließfähigen Mediums aufweist. Der Kopfabschnitt weist eine in die Kavität mündende Ausgabeöffnung zum Ausgeben des fließfähigen Mediums auf. Ferner weist die Vorrichtung eine zwischen einer ersten Endstellung und einer zweiten Endstellung in einer axialen Richtung verschiebbare Stange auf, wobei ein erster Endabschnitt der Stange einen Dichtabschnitt aufweist. Der Dichtabschnitt ist in der ersten Endstellung beabstandet von der Ausgabeöffnung angeordnet und ermöglicht somit in der ersten Endstellung eine Ausgabe des Klebstoffs. In der zweiten Endstellung verschließt der Dichtabschnitt der Stange die Ausgabeöffnung auf einer der Kavität zugewandten Seite. Ein zweiter Endabschnitt der Stange ist aus der Kavität herausgeführt und an einen Aktuator, konkret an einen Kolben eines Druckluftzylinders, angekoppelt. Die Vorrichtung weist eine Dichtung zur Abdichtung eines den zweiten Endabschnitt der Stange aufnehmenden Bereichs der Vorrichtung gegen die Kavität auf. Die Dichtung ist im Bereich der Kavität angeordnet, wobei die Dichtung die Stange im Bereich der Kavität umlaufend umschließt. Die Dichtung ist als Balgdichtung ausgebildet, wobei die Dichtung einen ersten Dichtungsabschnitt und einen zweiten Dichtungsabschnitt aufweist, wobei der erste Dichtungsabschnitt bezüglich der Stange ortsfest mit der Stange abdichtend in Eingriff steht, somit mit der Stange ortsfest verbunden ist. Aufgrund der ortsfesten Verbindung des ersten Dichtungsabschnitts mit der Stange folgt der erste Dichtungsabschnitt einer Bewegung der Stange. Der zweite Dichtungsabschnitt liegt ortsfest an einer die Kavität begrenzenden Wandung an. Zwischen dem ersten Dichtungsabschnitt und dem zweiten Dichtungsabschnitt weist die Dichtung einen Elastizitätsbereich auf, um die Relativbewegung der Stange bezüglich der Kavität, konkret bezüglich der die Kavität begrenzenden Wandung, an der der zweite Dichtungsabschnitt anliegt, auszugleichen bzw. aufzunehmen. Bei der EP 2 308 602 B1 ist des Weiteren vorgesehen, dass die Dichtung in der axialen Richtung gestaucht bzw. zusammengedrückt ist.

Das Zusammendrücken bzw. die Stauchung der Dichtung hat den Nachteil, dass zwecks Öffnens der Ausgabeöffnung eine relativ hohe Kraft aufgewendet werden muss, da das Öffnen der Ausgabeöffnung entgegen der aufgrund der Stauchung vorliegenden Federkraft der Dichtung erfolgt. Dies wirkt sich nachteilhaft auf die von dem Aktuator bereitzustellende Kraft und die zum Öffnen und Schließen benötigte Zeit aus.

Des Weiteren offenbart die US 6 343 721 B1 eine Ausgabevorrichtung zum Ausgeben eines fließfähigen Materials, die die Merkmale des Oberbegriffs des Patentanspruchs 1 aufweist. Die US 4 798 314 A offenbart weiteren Stand der Technik.

Aufgabe der vorliegenden Erfindung ist es, eine Vorrichtung zum Ausgeben eines fließfähigen Mediums, die die Merkmale des Oberbegriffs des Patentanspruchs 1 aufweist, derart weiterzubilden bzw. derart abzuwandeln, dass diese bei Überwindung der vorgenannten Nachteile dennoch die notwendige Dichtwirkung und Dauerfestigkeit aufweist.

Gelöst wird diese Aufgabe durch eine Vorrichtung, die die Merkmale des Patentanspruchs 1 aufweist.

Zur Lösung der vorgenannten Aufgabe ist vorgesehen, dass die Dichtung in der zweiten Endstellung der Stange gegenüber einem Grundzustand der Dichtung in der axialen Richtung gedehnt bzw. gestreckt ist.

Dementsprechend ist der Elastizitätsbereichs der Dichtung in dem Zustand, in dem die Ausgabeöffnung verschlossen ist, gestreckt und die Bewegung der Stange zwecks Öffnen der Ausgabeöffnung, das heißt zwecks Überführen der Stange von der zweiten Endstellung in die erste Endstellung, wird somit durch die Vorspannung des Elastizitätsbereichs der Dichtung unterstützt, wodurch sich die von dem Aktuator aufzubringende Kraft verringert bzw. die Dichtung als solche die Bewegung der Stange von der zweiten Endstellung in die erste Endstellung unterstützt.

Aufgrund der Tatsache, dass das in der Kavität vorliegende flüssige Medium typischerweise unter Druck steht und somit entsprechend auf die Dichtung einwirkt, werden die aufgrund der Dehnung bzw. Streckung der Dichtung in dieser vorliegenden Kräfte vorzugsweise teilweise kompensiert, sodass eine sehr hohe Dauerfestigkeit erreicht werden kann.

Insbesondere ist vorgesehen, dass die Streckung bzw. Dehnung der Dichtung derart ausgelegt ist, dass bei einem bekannten beim Betrieb der Vorrichtung vorliegenden Druck des fließfähigen Mediums, die in der Dichtung vorliegenden in Axialrichtung wirkenden Kräfte in der zweiten Endstellung der Stange verschwinden.

Dadurch kann die Dauerfestigkeit und somit die Lebensdauer der Dichtung erhöht werden.

In einer bevorzugten Ausführungsform der Vorrichtung ist der erste Dichtungsabschnitt stoffschlüssig mit der Stange verbunden.

Als besonders vorteilhaft wird es angesehen, wenn ohne Einwirkung einer externen Kraft auf die Stange und/oder auf die Dichtung sich die Stange in der ersten Endstellung oder sich die Stange zwischen der ersten Endstellung und der zweiten Endstellung befindet. Somit muss zwecks Schließens der Ausgabeöffnung eine Kraft in Richtung der zweiten Endstellung auf die Stange ausgeübt werden.

Als besonders vorteilhaft wird es angesehen, wenn die Vorrichtung Mittel aufweist, welche eine externe Kraft auf die Stange in Richtung der zweiten Endstellung ausüben, insbesondere ein Verschieben der Stange in Richtung der ersten Endstellung entgegen der Kraft der Mittel erfolgt. Die Mittel können beispielsweise eine Feder aufweisen oder durch eine Feder gebildet sein. Als besonders vorteilhaft wird es angesehen, wenn ohne Einwirkung des Aktuators auf die Stange sich die Stange in der zweiten Endstellung befindet.

Vorzugsweise weisen die Mittel einen Anschlag auf, wobei der Anschlag axial verschiebbar in dem Grundkörperabschnitt gelagert ist und mit der Stange und/oder dem Aktuator zusammenwirkt. Die Mittel weisen ferner ein mit dem Anschlag zusammenwirkendes Rückstellmittel auf, wobei eine Verschiebung des Anschlags in Richtung der ersten Endstellung der Stange entgegen der Rückstellkraft des Rückstellmittels erfolgt. Das Rückstellmittel kann beispielsweise als Feder ausgebildet sein.

Der zweite Dichtungsabschnitt ist vorzugsweise formschlüssig und/oder kraftschlüssig und/oder stoffschlüssig mit der die Kavität begrenzenden Wandung verbunden.

In einer bevorzugten Ausführungsform der Vorrichtung ist der zweite Dichtungsabschnitt der Dichtung zwischen dem Kopfabschnitt und dem Grundkörperabschnitt angeordnet, insbesondere klemmend gehalten.

Hinsichtlich einer besonders guten Dichtwirkung der Dichtung wird es als vorteilhaft angesehen, wenn die Dichtung im Bereich des zweiten Dichtungsabschnitts eine umlaufende Wulst aufweist. Die Wulst ist insbesondere auf einer dem Aktuator zugewandten Seite ausgebildet, steht somit in der axialen Richtung hervor.

Auch gegebenenfalls auftretenden Fertigungstoleranzen können durch die umlaufende Wulst ausgeglichen werden.

Des Weiteren begünstigt eine Wulst, dass die bei einem klemmenden Halten des zweiten Dichtungsabschnitts zwischen dem Kopfabschnitt und dem Grundkörperabschnitt beim Vorgang des Klemmens auftretende Kräfte von dem zweiten Dichtungsabschnitt zerstörungsfrei aufgenommen werden.

Die Vorrichtung weist mindestens eine in die Kavität mündende Einlassöffnung zum Zuführen des fließfähigen Mediums in die Kavität auf. Hinsichtlich einer besonders homogenen Verteilung des fließfähigen Mediums in der Kavität bzw. einer besonders homogenen Zuführung von dem fließfähigen Medium in die Kavität ist in einer besonders bevorzugten Ausführungsform vorgesehen, dass die Vorrichtung mehrere in die Kavität mündende Einlassöffnungen aufweist, wobei die Einlassöffnungen umlaufend um die Stange angeordnet sind.

Vorzugsweise sind die Einlassöffnungen regelmäßig, insbesondere äquidistant angeordnet.

Als besonders vorteilhaft wird es angesehen, wenn ein Winkelabstand der Einlassöffnungen 360° dividiert durch die Anzahl der Einlassöffnungen beträgt.

Vorzugsweise weist die Vorrichtung eine ungerade Anzahl von Einlassöffnungen auf. Eine ungerade Anzahl von Einlassöffnungen hat sich als besonders vorteilhaft hinsichtlich einer möglichst homogenen Zuführung erwiesen. Besonders bevorzugt weist die Vorrichtung fünf Einlassöffnungen auf.

Um das fließfähige Medium besonders homogen zuzuführen und somit auch die Dichtung besonders homogen zu beanspruchen bzw. Druck auf diese auszuüben, ist in einer bevorzugten Ausführungsform vorgesehen, dass die Einlassöffnungen entlang eines Kreisumfangs eines Kreises angeordnet sind, wobei eine Kreisebene des Kreises senkrecht zu der axialen Richtung ausgebildet ist.

Um die Dichtung besonders gleichmäßig anzuströmen wird es als vorteilhaft angesehen, wenn die Einlassöffnungen eine unterschiedlich große Querschnittsfläche aufweisen.

In einer besonders bevorzugten Ausführungsform der Vorrichtung weist die Vorrichtung einen ringförmigen Kanal auf, zur Zuführung des fließfähigen Mediums zu den mehreren Einlassöffnungen. Insbesondere ist vorgesehen, dass der ringförmige Kanal die Stange umlaufend umschließt. Der ringförmige Kanal muss aber nicht notwendigerweise geschlossen sein, so ist es durchaus denkbar, dass der ringförmige Kanal die Stange nur teilweise umschließt, beispielsweise die Stange in einem Winkelbereich von 270° umschließt.

Hinsichtlich eines besonders einfachen Zuführens von dem fließfähigen Medium in den Kanal wird es als vorteilhaft angesehen, wenn die Vorrichtung eine von außen zugängliche Zuleitung aufweist, wobei die Zuleitung in den ringförmigen Kanal mündet.

Die Zuleitung kann insbesondere einen Anschluss zum Anschließen eines Schlauchs zwecks Zuführens des fließfähigen Mediums aufweisen.

Als besonders vorteilhaft wird es angesehen, wenn der Kanal in Fluchtrichtung der Zuleitung frei von in die Kavität mündenden Einlassöffnungen ist.

Bei einer Ausführungsform mit mehreren Einlassöffnungen wird es als besonders vorteilhaft angesehen, wenn eine Querschnittsfläche einer Einlassöffnung, welche einen geringeren Abstand von der Zuleitung aufweist als eine andere Einlassöffnung, kleiner ist als eine Querschnittsfläche der anderen Einlassöffnung. Dadurch wird ein möglichst homogenes Anströmen der Dichtung begünstigt.

Der zweite Dichtungsabschnitt der Dichtung ist insbesondere als Flansch ausgebildet. Dadurch ist eine besonders einfache Montage der Dichtung bei besonders guter Dichtwirkung möglich.

Die Dichtung ist vorzugsweise als Balgdichtung ausgebildet. Bei der Balgdichtung kann es sich durchaus um eine Faltenbalgdichtung handeln.

In einer bevorzugten Ausführungsform ist vorgesehen, dass zumindest ein Teilabschnitt des Elastizitätsbereichs der Dichtung in einer radialen Richtung beabstandet von der Stange angeordnet ist. Dadurch werden Reibungskontakte und somit Reibungskräfte, die sich negativ auf die Lebensdauer der Dichtung auswirken, vermieden.

In einer vorteilhaften Weiterbildung ist vorgesehen, dass die Dichtung im Elastizitätsbereich eine konstante Wandstärke aufweist. Eine derartige Dichtung ist besonders einfach und kostengünstig zu fertigen und weist aufgrund der speziellen Gestaltung der Vorrichtung, nämlich dass die Dichtung in der zweiten Endstellung der Stange gegenüber dem Grundzustand der Dichtung in der axialen Richtung gedehnt bzw. gestreckt ist, dennoch die notwendige Dauerfestigkeit auf.

Als besonders vorteilhaft wird es angesehen, wenn der Elastizitätsbereich in einem parallel zu der axialen Richtung ausgebildeten, ebenen Querschnitt der Dichtung eine Krümmung aufweist. Unter dem Begriff "ebener Querschnitt" wird in diesem Zusammenhang ein Schnitt entlang einer Ebene verstanden. Insofern wird der Begriff "ebener Querschnitt" zur Abgrenzung gegenüber einem gestuften Querschnitt, auch als Stufenschnitt bezeichnet, verwendet. Insbesondere ist vorgesehen, dass die Krümmung des Elastizitätsbereichs durch eine Mittellinie des Querschnitts des Elastizitätsbereichs beschreibbar ist, wobei eine Krümmung der Mittellinie stetig ist. Die stetige Krümmung der Mittellinie gewährleistet, dass sich auch die Veränderungen der Spannung in der Dichtung stetig verhalten. Dadurch wird eine besonders lange Lebensdauer der Dichtung gewährleistet. Die Form der Mittellinie ist insbesondere durch einen Abschnitt einer quadratischen Sinusfunktion beschreibbar.

Vorzugsweise weist die Dichtung eine Symmetrieachse auf und der vorgenannte Querschnitt verläuft durch die Symmetrieachse der Dichtung. Die Symmetrieachse der Dichtung verläuft vorzugsweise durch die Stange der Vorrichtung.

In einer besonders vorteilhaften Weiterbildung ist vorgesehen, dass die Stange zumindest zweiteilig ausgeführt ist, wobei ein erstes Stangenteil den Dichtabschnitt aufweist, wobei das erste Stangenteil eine Aufnahme für ein zweites Stangenteil aufweist, wobei das zweite Stangenteil in der Aufnahme angeordnet ist und wobei der erste Dichtungsabschnitt mit dem ersten Stangenteil verbunden ist.

Vorzugsweise ist der erste Dichtungsabschnitt mit dem ersten Stangenteil und/oder mit dem zweiten Stangenteil kraftschlüssig und/oder formschlüssig und/oder stoffschlüssig verbunden.

In einer besonders vorteilhaften Weiterbildung ist vorgesehen, dass der erste Dichtungsabschnitt zwischen dem ersten Stangenteil und dem zweiten Stangenteil klemmend gelagert ist.

Um eine besonders hohe Lebensdauer zu erreichen, ist vorgesehen, dass der Elastizitätsbereich angrenzend an den ersten Dichtungsabschnitt einen ersten Anlageabschnitt aufweist und die Stange einen ersten Gleitabschnitt aufweist, wobei der erste Anlageabschnitt den ersten Gleitabschnitt
kontaktiert und/oder der Elastizitätsbereich angrenzend an den zweiten Dichtungsabschnitt einen zweiten Anlageabschnitt aufweist und die Vorrichtung einen die Stange umlaufend umschließenden Wandungsabschnitt aufweist, wobei der Wandungsabschnitt einen zweiten Gleitabschnitt aufweist, wobei der zweite Anlageabschnitt den zweiten Gleitabschnitt auf einer der Stange abgewandten Seite kontaktiert. Während dem Betätigen der Stange und der gleichzeitigen elastischen Verformung der Dichtung findet ggf. ein Gleiten bei den entsprechenden Gleitabschnitten statt. Auch bei der Montage und der erstmaligen In-Betrieb-Nahme werden durch die Gleitabschnitte Beschädigungen der Dichtung vermieden. Insbesondere ist vorgesehen, dass der jeweilige Gleitabschnitt eine Beschichtung und/oder eine geringere Rauigkeit gegenüber einem an den ersten Gleitabschnitt angrenzenden Bereich der Stange aufweist, um auftretende Reibungskräfte zu vermindern.

Vorzugsweise handelt es sich bei dem Aktuator um einen pneumatisch betätigbaren Kolben. Der Kolben wird vorzugsweise in einem Zylinder abgedichtet geführt, wobei der Kolben den Zylinder in einen ersten Zylinderabschnitt und einen zweiten Zylinderabschnitt unterteilt, wobei der jeweilige Zylinderabschnitt einen Anschluss zwecks Zuleiten von Druckluft aufweist. Zwecks Öffnen der Ausgabeöffnung wird der eine Anschluss mit Druckluft beaufschlagt und zwecks Schließen der Ausgabeöffnung der andere Anschluss mit Druckluft beaufschlagt.

In einer besonders vorteilhaften Weiterbildung ist vorgesehen, dass der Zylinderinnenraum mit einer weiteren Dichtung abgedichtet ist, wobei zwischen der Kavität und der weiteren Dichtung ein Überströmkanal in der Vorrichtung vorgesehen ist, , wobei der Überströmkanal der Dichtung, welche der Abdichtung des den zweiten Endabschnitt der Stange aufnehmenden Bereichs der Vorrichtung gegen die Kavität dient, nachgelagert ist. Der Überströmkanal ist in dem den zweiten Endabschnitt aufnehmenden Bereich der Vorrichtung ausgebildet und dient dem Ableiten von in diesen Bereich der Vorrichtung eindringenden, fehlgeleiteten Medien, welche trotz der Dichtung in diesen Bereich gelangen, bspw. in Folge einer Beschädigung der Dichtung oder eines Verschleißes der Dichtung oder einer Beschädigung und/oder eines Verschleißes der Verbindung zwischen der Dichtung und der Stange. Der Überströmkanal und die weitere Dichtung verhindern insbesondere, dass fehlgeleitete Medien in den Bereich des Aktuators gelangen.

### Figurenbeschreibung

In den nachfolgenden Figuren ist die Erfindung anhand eines Ausführungsbeispiels dargestellt, ohne hierauf beschränkt zu sein.

Es zeigen:
- Fig. 1: eine Vorrichtung zum Ausgeben eines fließfähigen Mediums, in einer Schnittansicht,
- Fig. 2: einen Teilbereich der Vorrichtung gemäß Fig. 1, in einer Schnittansicht,
- Fig. 3: die Vorrichtung gemäß Fig. 1, in einer ersten perspektivischen Ansicht,
- Fig. 4: die Vorrichtung gemäß Fig. 1, in einer zweiten perspektivischen Ansicht.

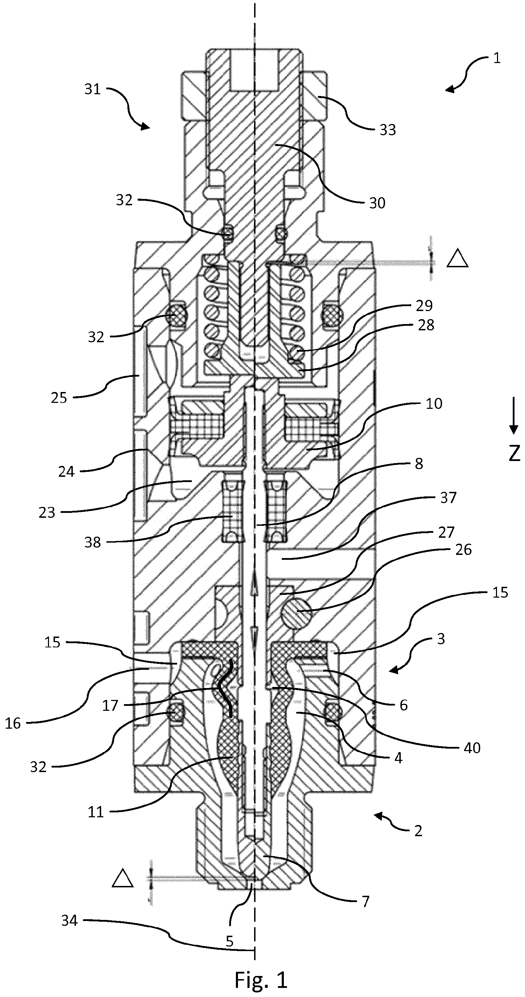

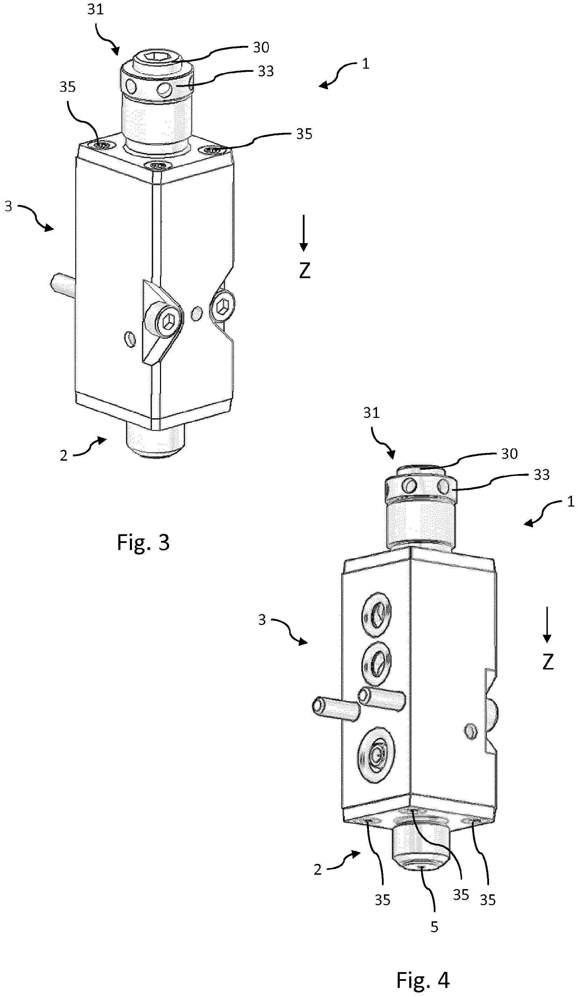

Die Fig. 1 bis 4 zeigen eine erste Ausführungsform der Vorrichtung 1 zum Ausgeben eines fließfähigen Mediums, vorliegend zum Ausgeben eines Schmelzklebstoffs. Die Vorrichtung 1 weist einen Kopfabschnitt 2 und einen Grundkörperabschnitt 3 auf. Dabei ist der Kopfabschnitt 2 in den Grundkörperabschnitt 3 eingesetzt und stirnseitig mittels vier Schrauben 35 mit dem Grundkörperabschnitt 3 verschraubt. Zwecks Abdichtung ist zwischen Grundkörperabschnitt 3 und dem Kopfabschnitt 2 ein Dichtring 32 angeordnet. Die Vorrichtung 1 weist eine Kavität 4 auf, wobei diese Kavität 4 der Aufnahme des fließfähigen Mediums dient. Die Kavität 4 ist vorliegend in dem Kopfabschnitt 2 ausgebildet. Der Kopfabschnitt 2 weist eine in die Kavität 4 mündende Ausgabeöffnung 5 zum Ausgeben des fließfähigen Mediums, vorliegend des Schmelzklebstoffs, auf. Des Weiteren weist die Vorrichtung 1 eine Stange 7, 8 auf, wobei die Stange 7, 8 vorliegend zweiteilig ausgeführt ist, nämlich ein erstes Stangenteil 7 und ein zweites Stangenteil 8 aufweist, wobei das erste Stangenteil 7 eine Aufnahme für das zweite Stangenteil 8 aufweist, wobei das zweite Stangenteil 8 in der Aufnahme angeordnet ist. Vorliegend weist das zweite Stangenteil 8 ein Außengewinde auf, wobei das erste Stangenteil 7 im Bereich der Aufnahme ein zu dem Außengewinde des zweiten Stangenteils 8 korrespondierendes Innengewinde aufweist. Zwecks Verbindens des ersten Stangenteils 7 mit dem zweiten Stangenteil 8 wird das zweite Stangenteil 8 in das Gewinde des ersten Stangenteils 7 eingeschraubt und vorzugsweise zusätzlich mit dem ersten Stangenteil 7 verklebt.

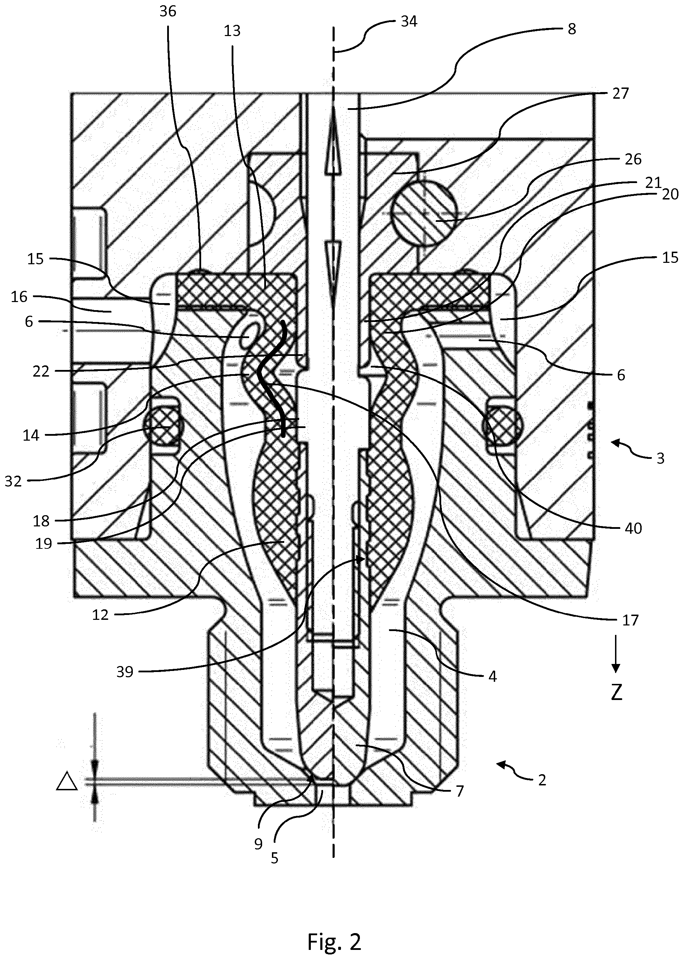

Die Stange 7, 8 ist zwischen einer ersten Endstellung und einer zweiten Endstellung in einer axialen Richtung Z verschiebbar. Diese beiden Stellungen sind in den Fig. 1 und 2 dargestellt, wobei die linke Hälfte der jeweiligen Abbildung die Stange 7, 8 bzw. die Vorrichtung 1 in der ersten Endstellung der Stange 7, 8 zeigt und die rechte Hälfte der jeweiligen Abbildung die Stange 7, 8 bzw. die Vorrichtung 1 in der zweiten Endstellung der Stange 7, 8 zeigt.

Die Stange 7, 8 weist einen ersten Endabschnitt auf, welcher vorliegend durch das erste Stangenteil 7 gebildet ist. Der erste Endabschnitt weist einen Dichtabschnitt 9 auf, der dem dichten Verschließen der Ausgabeöffnung 5 in der zweiten Endstellung der Stange 7, 8 dient.

In der ersten Endstellung der Stange 7, 8 ist der Dichtabschnitt 9 beabstandet von der Ausgabeöffnung 5 angeordnet und in der zweiten Endstellung verschließt der Dichtabschnitt 9 die Ausgabeöffnung 5 auf einer die Kavität 4 zugewandten Seite. Der axiale Abstand des Dichtabschnitts 9 in der ersten Endstellung von der Position des Dichtabschnitts 9 in der zweiten Endstellung ist mit dem Bezugszeichen Δ bezeichnet. Der Abstand Δ ist identisch mit dem Hub der Hubbewegung der Stange 7, 8. Zum Bewegen der Stange 7, 8 ist ein zweiter Endabschnitt der Stange 7, 8, welcher vorliegend durch das zweite Stangenteil 8 gebildet ist, aus der Kavität 4 herausgeführt und an einen Aktuator 10, vorliegend einen Kolben eines pneumatischen Zylinders 23 angekoppelt, vorliegend in dem Kolben 10 gelagert. Der Zylinder 23 weist zwei durch den Kolben 10 getrennte Zylinderabschnitte auf, wobei ein erster Anschluss 24 in den dem Kopfabschnitt 2 zugewandten Zylinderabschnitt mündet und ein zweiter Anschluss 25 in den dem Kopfabschnitt 2 abgewandten Zylinderabschnitt mündet. Zwecks Überführens der Stange 7, 8 von der zweiten Endstellung in die erste Endstellung wird der erste Anschluss 24 mit Druckluft beaufschlagt. Für das Überführend der Stange 7, 8 von der ersten Endstellung in die zweite Endstellung wird dementsprechend der zweite Anschluss 25 mit Druckluft beaufschlagt.

Um den Hub der Stange 7, 8 und somit des Dichtabschnitts 9 zu begrenzen, wird ein Anschlag 28 verwendet. Der Anschlag 28 ist in einem Deckel 31 angeordnet, wobei der Deckel 31 wiederum mit dem Grundkörperabschnitt 3 stirnseitig mittels Schrauben 35 verschraubt ist. Der Anschlag 28 ist verschiebbar in dem Deckel 31 gelagert, wobei eine Verschiebung des Anschlags 28 in Öffnungsrichtung der Stange 7, 8 entgegen der Rückstellkraft eines als Feder ausgebildeten Rückstellmittels 29 erfolgt. Insofern bilden der Anschlag 28 und das Rückstellmittel 29 Mittel, welche eine externe Kraft auf die Stange 7, 8 in Richtung der zweiten Endstellung ausüben. In einem drucklosen Zustand der Vorrichtung 1 wird die Stange 7, 8 durch den Anschlag 28 in Richtung der zweiten Endstellung der Stange 7, 8 gedrückt. Somit wird vermieden, dass in einem drucklosen Zustand fließfähiges Medium, vorliegend Klebstoff, aus der Ausgangsöffnung 5 austritt. Ebenso besteht der Vorteil, dass keine Luftfeuchtigkeit in die Kavität 4 eintreten kann. Dies bewirkt, dass bei Verwendung von einem reaktiven Klebstoff, wie beispielsweise PUR, dieser nicht aushärten kann. Die Position des Anschlags 28 und somit der Hub der Stange 7, 8 kann mittels des als Einstellschraube ausgebildeten Einstellmittels 30 verändert werden, indem diese mehr oder weniger weit in den Deckel 31 bzw. in den Grundkörperabschnitt 3 eingeschraubt wird. Mittels des Einstellmittels 30 können somit Fertigungstoleranzen ausgeglichen werden und eine Feineinstellung der Hubbewegung der Stange 7, 8 vorgenommen werden. Um ein Losdrehen des Einstellmittels 30 zu verhindern, ist das Einstellmittel 30 mit einer Kontermutter 33 gesichert.

Um einen den zweiten Endabschnitt aufnehmenden Bereich der Vorrichtung 1 und somit auch den Aktuator 10 gegen die Kavität 4 abzudichten, weist die Vorrichtung 1 eine Dichtung 11 auf, welche vorliegend als Balgdichtung ausgebildet ist.

Diese Dichtung 11 ist im Bereich der Kavität 4 angeordnet und umschließt die Stange 7, 8 im Bereich der Kavität 4 umlaufend. Die Dichtung 11 weist einen ersten Dichtungsabschnitt 12 und einen zweiten Dichtungsabschnitt 13 auf, wobei der erste Dichtungsabschnitt 12 ortsfest und dichtend mit der Stange 7, 8, vorliegend dem ersten Stangenteil 7, verbunden ist, und wobei der zweite Dichtungsabschnitt 13 ortsfest und dichtend an einer die Kavität 4 begrenzenden Wandung anliegt.

Die Dichtung 11 verhindert insbesondere, dass Schmelzklebstoff in den Zwischenbereich 40 zwischen der Dichtung 11 und der Stange 7, 8 und von dort in den den zweiten Endabschnitt aufnehmenden Bereich der Vorrichtung 1 gelangt.

Aufgrund der bezogen auf die Stange 7, 8 ortsfesten Verbindung des ersten Dichtungsabschnitts 12 mit der Stange 7, 8 folgt der erste Dichtungsabschnitt 12 der Bewegung der Stange 7, 8.

Vorliegend ist der zweite Dichtungsabschnitt 13 als Flansch ausgebildet, wobei der zweite Dichtungsabschnitt 13 zwischen dem Kopfabschnitt 2 und dem Grundkörperabschnitt 3 klemmend gehalten ist.

Um auch bei auftretenden Fertigungstoleranzen eine gute Abdichtung zu gewährleisten, weist der zweite Dichtungsabschnitt 13 eine umlaufende Wulst 36 auf, wobei diese umlaufende Wulst 36 auf einer dem Aktuator 10 zugewandten Seite ausgebildet ist. Des Weiteren begünstigt die Wulst 36, dass die beim Verschrauben von dem Kopfabschnitt 2 mit dem Grundkörperabschnitt 3 an dem zweiten Dichtungsabschnitt 13 auftretende Kräfte von dem zweiten Dichtungsabschnitt 13 zerstörungsfrei aufgenommen werden können.

Die Dichtung 11 weist zwischen dem ersten Dichtungsabschnitt 12 und dem zweiten Dichtungsabschnitt 13 einen Elastizitätsbereich 14 auf. Dieser Elastizitätsbereich 14 dient dem Ausgleich der Änderung des Abstands zwischen dem ersten Dichtungsabschnitt 12 und dem zweiten Dichtungsabschnitt 13, welche beim Verschieben der Stange 7, 8 zwecks Überführen der Stange 7, 8 von der ersten Endstellung in die zweite Endstellung und umgekehrt auftritt.

Vorliegend ist die Dichtung 11 bzw. die Anordnung der Dichtung 11 in der Vorrichtung 1 derart gestaltet, dass in der zweiten Endstellung der Stange 7, 8 die Dichtung 11 gegenüber einem Grundzustand der Dichtung 11 in der axialen Richtung Z gedehnt bzw. gestreckt ist.

Bei dem vorliegenden Ausführungsbeispiel ist vorgesehen, dass der erste Dichtungsabschnitt 12 stoffschlüssig mit der Stange 7, 8 verbunden ist. Das erste Stangenteil 7 weist an der Verbindungsfläche mit dem ersten Dichtungsabschnitt 12 mehrere in der axialen Richtung Z beabstandete, vorzugsweise umlaufende Hinterschneidungen 39 auf, um die in diesem Bereich auftretenden Axialkräfte besser aufnehmen zu können, die durch den anliegenden Klebstoffdruck und durch die Betätigungskräfte der Stange 7, 8 entstehen.

Die Vorrichtung 1 weist mehrere in die Kavität 4 mündende Einlassöffnungen 6 auf, konkret fünf Einlassöffnungen 6 auf. Diese Einlassöffnungen 6 sind umlaufend und äquidistant um die Stange 7, 8 angeordnet. Vorliegend sind die Einlassöffnungen 6 entlang eines Kreisumfangs eines Kreises angeordnet, wobei eine Kreisebene des Kreises senkrecht zu der axialen Richtung Z ausgebildet ist.

Vorliegend weisen die Einlassöffnungen 6 unterschiedlich große Querschnittsflächen, konkret unterschiedlich große Durchmesser, auf.

Diese Ausgestaltung der Einlassöffnungen 6 gewährleistet, dass das fließfähige Medium, vorliegend der Klebstoff, gleichmäßig in die Kavität 4 einfließt und somit über den gesamten Umfang der Dichtung 11 gleichmäßig verteilt wird und insbesondere keine Toträume in der Kavität 4 entstehen, in denen sich der Klebstoff staut und somit nicht der Ausgabeöffnung 5 zugeführt wird. Diese Gestaltung der Einlassöffnungen 6 hat des Weiteren den Vorteil, dass eine möglichst gleichmäßige Anströmung des Klebstoffs in die Kavität 4 und somit in Richtung der Dichtung 11 gewährleistet ist, wodurch eine möglichst rotationssymmetrische Belastung der Dichtung 11 erreicht wird. Dies wirkt sich positiv auf die Dauerfestigkeit der Dichtung 11 aus.

Die Vorrichtung 1 weist des Weiteren einen ringförmigen Kanal 15 auf, zur Zuführung des fließfähigen Mediums zu den mehreren Einlassöffnungen 6. Dieser ringförmige Kanal 15 umschließt die Stange 7, 8 umlaufend. Vorliegend ist der umlaufende Kanal 15 durch einen ringförmigen Spalt zwischen dem Grundkörperabschnitt 3, dem Kopfabschnitt 2 und dem zweiten Dichtungsabschnitt 13 gebildet.

Die Vorrichtung 1 weist eine von außen zugängliche Zuleitung 16 auf, wobei die Zuleitung 16 in den ringförmigen Kanal 15 mündet und der Zuführung von Klebstoff bzw. fließfähigem Medium von außen in die Vorrichtung 1, konkret den Kanal 15 dient.

Ein Teilabschnitt des Elastizitätsbereichs 14 der Dichtung 11 ist in einer radialen Richtung beabstandet von der Stange 7, 8 angeordnet. Die radiale Richtung ist dabei senkrecht zu der axialen Richtung Z ausgerichtet.

Wie sich insbesondere der Fig. 2 entnehmen lässt, weist der Elastizitätsbereich 14 in einem durch eine Mittelachse 34 der Stange 7, 8 verlaufenden, ebenen Querschnitt der Dichtung 11 eine Krümmung auf, welche durch eine Mittellinie 17 des Querschnitts des Elastizitätsbereichs 14 beschreibbar ist. Die Krümmung der Mittellinie 17 ist stetig, vorliegend durch einen Abschnitt einer quadratischen Sinusfunktion beschreibbar.

Der Elastizitätsbereich 14 weist angrenzend an den ersten Dichtungsabschnitt 12 einen ersten Anlageabschnitt 18 auf und die Stange 7, 8 weist einen ersten Gleitabschnitt 19 auf, wobei der erste Anlageabschnitt 18 den ersten Gleitabschnitt 19 kontaktiert. Hinsichtlich des Gleitabschnitts wird es als besonders vorteilhaft angesehen, wenn der erste Gleitabschnitt 19 eine Beschichtung und/oder eine geringere Rauigkeit gegenüber einem an den ersten Gleitabschnitt 19 angrenzenden Bereich der Stange 7, 8 aufweist.

Der Elastizitätsbereich 14 weist des Weiteren angrenzend an den zweiten Dichtungsabschnitt 13 ebenfalls einen Anlageabschnitt 20 auf und die Vorrichtung 1 weist einen die Stange 7, 8 umlaufend umschließenden Wandungsabschnitt 22 auf, wobei der Wandungsabschnitt 22 einen zweiten Gleitabschnitt 21 aufweist, wobei der zweite Anlageabschnitt 20 den zweiten Gleitabschnitt 21 auf einer der Stange 7, 8 abgewandten Seite kontaktiert. Auch bei dem zweiten Gleitabschnitt 21 wird es als vorteilhaft angesehen, wenn dieser eine Beschichtung und/oder eine geringere Rauigkeit gegenüber einem an dem zweiten Gleitabschnitt 21 angrenzenden Bereich des Wandungsabschnitts 22 aufweist.

Die Vorrichtung 1 weist eine Führungshülse 27 auf, wobei die Führungshülse 27 in dem Grundkörperabschnitt 3 gelagert ist. Die Führungshülse 27 dient der Aufnahme des zweiten Endabschnitts der Stange 7, 8, wobei der zweite Endabschnitt der Stange 7, 8 die Führungshülse 27 durchsetzt. Die Führungshülse 27 weist eine umlaufende Nut auf, wobei der Grundkörperabschnitt 3 angrenzend an die Nut eine Bohrung aufweist, wobei zwecks stabiler Lagerung der Führungshülse 27 in dem Grundkörperabschnitt 3 ein Haltestift 26 in die Nut und die an die Nut angrenzende Bohrung eingeführt ist.

Die Führungshülse 27 nimmt den zweiten Endabschnitt der Stange 7, 8 auf und dient der Führung der Bewegung der Stange 7, 8. Die Führungshülse 27 weist im Bereich des Wandungsabschnitts 22 den zweiten Gleitabschnitt 21 auf.

Die Gesamtheit der Einlassöffnungen 6, des ringförmigen Kanals 15, der Kavität 4, der Dichtung 11 ist, abgesehen von den unterschiedlich großen Durchmessern der Einlassöffnungen 6, radiär- bzw. rotationssymmetrisch und insbesondere konzentrisch zu der Stange 7, 8 ausgebildet.

Um die Vorrichtung 1 bzw. Komponenten der Vorrichtung 1 gegeneinander abzudichten, weist die Vorrichtung 1 zwischen dem Kopfabschnitt 2 und dem Grundkörperabschnitt 3 einen Dichtring 32, zwischen dem Deckel 31 und dem Grundkörperabschnitt 3 einen Dichtring 32 und zwischen dem Einstellmittel 30 und einer Außenwandung des Deckels 31 ebenfalls einen Dichtring 32 auf. Des Weiteren ist zwischen dem zweiten Stangenteil 8 und dem grundkörperabschnitt 3 im Bereich zwischen dem Zylinder 23 und einem Überströmkanal 37 eine weitere Dichtung 38 angeordnet.

Der Überströmkanal 37 ist der Dichtung 11, welche der Abdichtung des den zweiten Endabschnitt der Stange 7, 8 aufnehmenden Bereichs der Vorrichtung 1 gegen die Kavität 4 dient, nachgelagert. Der Überströmkanal 37 ist in dem den zweiten Endabschnitt aufnehmenden Bereich der Vorrichtung 1 ausgebildet und dient dem Ableiten von in diesen Bereich der Vorrichtung 1 eindringendem, fehlgeleitetem Schmelzklebstoff, welche trotz der Dichtung 11 in diesen Bereich gelangt. Der Überströmkanal 37 und die weitere Dichtung 38 verhindern insbesondere, dass fehlgeleiteter Schmelzklebstoffs in den Bereich des Aktuators 10 gelangt.

Die Dichtung 11 ist so gefertigt, dass, in einem eingebauten Zustand der Dichtung 11, sich die Stange 7, 8 ohne Belastungen von außen in der ersten Endstellung befindet. Vorzugsweise wird die Dichtung 11 ohne jegliche Vorspannung des Elastizitätsbereichs 14 eingebaut.

Vorzugsweise ist die Vorrichtung 1 derart gefertigt, dass im Auslegungspunkt Spannungen in der Dichtung 11 in der axialen Richtung weitgehend verschwinden, das heißt die Randbedingungen, wie Größe der Hubbewegung, Temperatur, Klebstoffdruck bzw. Mediumdruck und Viskosität derart gewählt sind, dass die anliegenden Spannungen in der Dichtung 11 in der axialen Richtung Z weitgehend verschwinden.

Im Hinblick auf eine besonders einfache und kostengünstige Fertigung wird es als vorteilhaft angesehen, wenn zunächst die Dichtung 11 mit dem ersten Dichtungsabschnitt 12 mit dem ersten Stangenteil 7 verbunden wird. Im Anschluss daran wird das zweite Stangenteil 8 mit dem ersten Stangenteil 7 verbunden, vorliegend mit diesem verschraubt und ggf. verklebt. Dabei ist darauf zu achten, dass beim Einschrauben des zweiten Stangenteils 8 in das erste Stangenteil 7 die Dichtung 11 nicht beschädigt wird.

### Bezugszeichenliste

- 1: Vorrichtung
- 2: Kopfabschnitt
- 3: Grundkörperabschnitt
- 4: Kavität
- 5: Ausgabeöffnung
- 6: Einlassöffnung
- 7: Erstes Stangenteil
- 8: Zweites Stangenteil
- 9: Dichtabschnitt
- 10: Aktuator
- 11: Dichtung
- 12: Erster Dichtungsabschnitt
- 13: Zweiter Dichtungsabschnitt
- 14: Elastizitätsbereich
- 15: Kanal
- 16: Zuleitung
- 17: Mittellinie
- 18: Erster Anlageabschnitt
- 19: Erster Gleitabschnitt
- 20: Zweiter Anlageabschnitt
- 21: Zweiter Gleitabschnitt
- 22: Wandungsabschnitt
- 23: Zylinder
- 24: Erster Anschluss
- 25: Zweiter Anschluss
- 26: Haltestift
- 27: Führungshülse
- 28: Anschlag
- 29: Rückstellmittel
- 30: Einstellmittel
- 31: Deckel
- 32: Dichtring
- 33: Kontermutter
- 34: Mittelachse
- 35: Schraube
- 36: Wulst
- 37: Überströmkanal
- 38: Weitere Dichtung
- 39: Hinterschneidung
- 40: Zwischenbereich

- Z: Axiale Richtung
- Δ: Hubweg

## Patentansprüche

1. Vorrichtung (1) zum Ausgeben eines fließfähigen Mediums, insbesondere zum Ausgeben eines Klebstoffs, vorzugsweise zum Ausgeben eines Schmelzklebstoffs, wobei die Vorrichtung (1) einen Kopfabschnitt (2) und einen Grundkörperabschnitt (3) aufweist, wobei die Vorrichtung (1) eine Kavität (4) zur Aufnahme des fließfähigen Mediums aufweist, wobei der Kopfabschnitt (2) eine in die Kavität (4) mündende Ausgabeöffnung (5) zum Ausgeben des fließfähigen Mediums aufweist, wobei die Vorrichtung (1) eine Stange (7, 8) aufweist, wobei die Stange (7, 8) zwischen einer ersten Endstellung und einer zweiten Endstellung in einer axialen Richtung (Z) verschiebbar ist, wobei ein erster Endabschnitt der Stange (7, 8) einen Dichtabschnitt (9) aufweist, wobei der Dichtabschnitt (9) in der ersten Endstellung beabstandet von der Ausgabeöffnung (5) angeordnet ist und in der zweiten Endstellung die Ausgabeöffnung (5) auf einer der Kavität (4) zugewandten Seite verschließt, wobei ein zweiter Endabschnitt der Stange (7, 8) aus der Kavität (4) herausgeführt ist, zur Ankopplung der Stange (7, 8) an einen Aktuator (10), wobei die Vorrichtung (1) eine Dichtung (11) aufweist, zur Abdichtung eines den zweiten Endabschnitt aufnehmenden Bereichs der Vorrichtung (1) gegen die Kavität (4), wobei die Dichtung (11) im Bereich der Kavität (4) angeordnet ist, wobei die Dichtung (11) die Stange (7, 8) im Bereich der Kavität (4) umlaufend umschließt, wobei die Dichtung (11) einen ersten Dichtungsabschnitt (12) und einen zweiten Dichtungsabschnitt (13) aufweist, wobei der erste Dichtungsabschnitt (12) bezüglich der Stange (7, 8) ortsfest mit der Stange (7, 8) verbunden ist und der zweite Dichtungsabschnitt (13) ortsfest an einer die Kavität (4) begrenzenden Wandung anliegt, wobei die Dichtung (11) zwischen dem ersten Dichtungsabschnitt (12) und dem zweiten Dichtungsabschnitt (13) einen Elastizitätsbereich (14) aufweist, wobei die Dichtung (11) in der zweiten Endstellung der Stange (7, 8) gegenüber einem Grundzustand der Dichtung (11) in der axialen Richtung (Z) gedehnt ist, **dadurch gekennzeichnet, dass** der Elastizitätsbereich (14) angrenzend an den ersten Dichtungsabschnitt (12) einen ersten Anlageabschnitt (18) aufweist und die Stange (7, 8) einen ersten Gleitabschnitt (19) aufweist, wobei der erste Anlageabschnitt (18) den ersten Gleitabschnitt (19) kontaktiert, und/oder der Elastizitätsbereich (14) angrenzend an den zweiten Dichtungsabschnitt (13) einen zweiten Anlageabschnitt (20) aufweist und die Vorrichtung (1) einen die Stange (7, 8) umlaufend umschließenden Wandungsabschnitt (22) aufweist, wobei der Wandungsabschnitt (22) einen zweiten Gleitabschnitt (21) aufweist, wobei der zweite Anlageabschnitt (20) den zweiten Gleitabschnitt (21) auf einer der Stange (7, 8) abgewandten Seite kontaktiert.

2. Vorrichtung (1) nach Anspruch 1, wobei der erste Dichtungsabschnitt (12) stoffschlüssig mit der Stange (7, 8) verbunden ist.

3. Vorrichtung (1) nach Anspruch 1 oder 2, wobei ohne Einwirkung einer externen Kraft auf die Stange (7, 8) und/oder ohne Einwirkung einer externen Kraft auf die Dichtung (11) sich die Stange (7, 8) in der ersten Endstellung befindet oder ohne Einwirkung einer externen Kraft auf die Stange (7, 8) und/oder ohne Einwirkung einer externen Kraft auf die Dichtung (11) sich die Stange (7, 8) zwischen der ersten Endstellung und der zweiten Endstellung befindet.

4. Vorrichtung (1) nach Anspruch 3, wobei die Vorrichtung (1) Mittel (28, 29) aufweist, wobei die Mittel (28, 29) eine externe Kraft auf die Stange (7, 8) in Richtung der zweiten Endstellung ausüben.

5. Vorrichtung (1) nach einem der Ansprüche 1 bis 4, wobei die Vorrichtung (1) mehrere in die Kavität (4) mündende Einlassöffnungen (6) aufweist, wobei die Einlassöffnungen (6) umlaufend um die Stange (7, 8) angeordnet sind.

6. Vorrichtung (1) nach Anspruch 5, wobei die Einlassöffnungen (6) entlang eines Kreisumfangs eines Kreises angeordnet sind, wobei eine Kreisebene des Kreises senkrecht zu der axialen Richtung (Z) ausgebildet ist.

7. Vorrichtung (1) nach Anspruch 5 oder 6, wobei die Vorrichtung (1) einen ringförmigen Kanal (15) aufweist, zur Zuführung des fließfähigen Mediums zu den mehreren Einlassöffnungen (6), insbesondere der ringförmige Kanal (15) die Stange (7, 8) umlaufend umschließt.

8. Vorrichtung (1) nach einem der Ansprüche 1 bis 7, wobei der zweite Dichtungsabschnitt (13) als Flansch ausgebildet ist.

9. Vorrichtung (1) nach einem der Ansprüche 1 bis 8, wobei die Dichtung (11) als Balgdichtung ausgebildet ist.

10. Vorrichtung (1) nach einem der Ansprüche 1 bis 9, wobei zumindest ein Teilabschnitt des Elastizitätsbereichs (14) der Dichtung (11) in einer radialen Richtung beabstandet von der Stange (7, 8) angeordnet ist.

11. Vorrichtung (1) nach einem der Ansprüche 1 bis 10, wobei zumindest ein Teilabschnitt des Elastizitätsbereichs (14) in der radialen Richtung gegenüber dem ersten Dichtungsabschnitt (12) hervorsteht.

12. Vorrichtung (1) nach einem der Ansprüche 1 bis 11, wobei die Dichtung (11) im Elastizitätsbereich (14) eine konstante Wandstärke aufweist.

13. Vorrichtung (1) nach einem der Ansprüche 1 bis 12, wobei der Elastizitätsbereich (14) in einem parallel zu der axialen Richtung (Z) ausgebildeten, ebenen Querschnitt der Dichtung (11) eine Krümmung aufweist, insbesondere die Krümmung des Elastizitätsbereichs (14) durch eine Mittellinie (17) des Querschnitts des Elastizitätsbereichs (14) beschreibbar ist, wobei eine Krümmung der Mittellinie (17) stetig ist, insbesondere die Mittellinie (17) durch einen Abschnitt einer quadratischen Sinusfunktion beschreibbar ist.

14. Vorrichtung (1) nach einem der Ansprüche 1 bis 13, wobei die Stange (7 ,8) zumindest zweiteilig ausgeführt ist, wobei ein erstes Stangenteil (7) den Dichtabschnitt (9) aufweist, wobei der erste Dichtungsabschnitt (12) mit dem ersten Stangenteil (7) verbunden ist und/oder der erste Dichtungsabschnitt (12) zwischen dem ersten Stangenteil (7) und dem zweiten Stangenteil (8) klemmend gelagert ist.

## Claims

1. Device (1) for dispensing a fluid medium, in particular for dispensing an adhesive, preferably for dispensing a hot melt adhesive, wherein the device (1) comprises a head portion (2) and a base body portion (3), wherein the device (1) comprises a cavity (4) for receiving the fluid medium, wherein the head portion (2) comprises a dispensing opening (5), leading into the cavity (4), for dispensing the fluid medium, wherein the device (1) comprises a rod (7, 8), wherein the rod (7, 8) is displaceable in an axial direction (Z) between a first end position and a second end position, wherein a first end portion of the rod (7, 8) comprises a sealing portion (9), wherein the sealing portion (9), in the first end position, is arranged spaced from the dispensing opening (5) and, in the second end position, closes the dispensing opening (5) on a side facing the cavity (4), wherein a second end portion of the rod (7, 8) is guided out of the cavity (4) for coupling the rod (7, 8) to an actuator (10), wherein the device (1) comprises a seal (11) for sealing a region of the device (1) which receives the second end portion with respect to the cavity (4), wherein the seal (11) is arranged in the region of the cavity (4), wherein the seal (11) surrounds the rod (7, 8) circumferentially in the region of the cavity (4), wherein the seal (11) comprises a first seal portion (12) and a second seal portion (13), wherein the first seal portion (12) is connected to the rod (7, 8) such that it is stationary with respect to the rod (7, 8) and the second seal portion (13) abuts in a stationary manner against a wall delimiting the cavity (4), wherein the seal (11) comprises an area of elasticity (14) between the first seal portion (12) and the second seal portion (13), wherein the seal (11), in the second end position of the rod (7, 8), is stretched in the axial direction (Z) in relation to an initial state of the seal (11), **characterized in that** the area of elasticity (14) comprises a first contact portion (18) adjoining the first seal portion (12), and the rod (7, 8) comprises a first anti-friction portion (19), wherein the first contact portion (18) contacts the first anti-friction portion (19), and/or the area of elasticity (14) comprises a second contact portion (20) adjoining the second seal portion (13) and the device (1) comprises a wall portion (22) surrounding the rod (7, 8) circumferentially, wherein the wall portion (22) comprises a second anti-friction portion (21), wherein the second contact portion (20) contacts the second anti-friction portion (21) on a side remote from the rod (7, 8).

2. Device (1) according to Claim 1, wherein the first seal portion (12) is connected to the rod (7, 8) with material fit.

3. Device (1) according to Claim 1 or 2, wherein, without the effect of an external force on the rod (7, 8) and/or without the effect of an external force on the seal (11), the rod (7, 8) is located in the first end position, or, without the effect of an external force on the rod (7, 8) and/or without the effect of an external force on the seal (11), the rod (7, 8) is located between the first end position and the second end position.

4. Device (1) according to Claim 3, wherein the device (1) comprises means (28, 29), wherein the means (28, 29) exert an external force on the rod (7, 8) in the direction of the second end position.

5. Device (1) according to one of Claims 1 to 4, wherein the device (1) comprises a plurality of inlet openings (6) leading into the cavity (4), wherein the inlet openings (6) are arranged circumferentially around the rod (7, 8).

6. Device (1) according to Claim 5, wherein the inlet openings (6) are arranged along a circular circumference of a circle, wherein a circular plane of the circle is formed perpendicularly to the axial direction (Z).

7. Device (1) according to Claim 5 or 6, wherein the device (1) comprises an annular channel (15) for supplying the fluid medium to the plurality of inlet openings (6), in particular the annular channel (15) surrounds the rod (7, 8) circumferentially.

8. Device (1) according to one of Claims 1 to 7, wherein the second seal portion (13) is formed as a flange.

9. Device (1) according to one of Claims 1 to 8, wherein the seal (11) is formed as a bellows seal.

10. Device (1) according to one of Claims 1 to 9, wherein at least a segment of the area of elasticity (14) of the seal (11) is arranged spaced from the rod (7, 8) in a radial direction.

11. Device (1) according to one of Claims 1 to 10, wherein at least a segment of the area of elasticity (14) protrudes with respect to the first seal portion (12) in the radial direction.

12. Device (1) according to one of Claims 1 to 11, wherein the seal (11) has a constant wall thickness in the area of elasticity (14).

13. Device (1) according to one of Claims 1 to 12, wherein the area of elasticity (14) has a curvature in a planar cross section of the seal (11) formed parallel to the axial direction (Z), in particular the curvature of the area of elasticity (14) can be described by a centre line (17) of the cross section of the area of elasticity (14), wherein a curvature of the centre line (17) is constant, in particular the centre line (17) can be described by a segment of a quadratic sine function.

14. Device (1) according to one of Claims 1 to 13, wherein the rod (7, 8) is designed in at least two parts, wherein a first rod part (7) comprises the sealing portion (9), wherein the first seal portion (12) is connected to the first rod part (7) and/or the first seal portion (12) is mounted in a clamping manner between the first rod part (7) and the second rod part (8).

## Revendications

1. Dispositif (1) pour distribuer un milieu fluide, notamment pour distribuer un adhésif, de préférence pour distribuer un adhésif thermofusible, le dispositif (1) présentant une section de tête (2) et une section de corps de base (3), le dispositif (1) présentant une cavité (4) pour recevoir le milieu fluide, la section de tête (2) présentant une ouverture de distribution (5) débouchant dans la cavité (4) pour distribuer le milieu fluide, le dispositif (1) présentant une tige (7, 8), la tige (7, 8) pouvant être déplacée entre une première position d'extrémité et une deuxième position d'extrémité dans une direction axiale (Z), une première section d'extrémité de la tige (7, 8) présentant une section d'étanchéité (9), la section d'étanchéité (9) étant agencée à distance de l'ouverture de distribution (5) dans la première position d'extrémité et fermant l'ouverture de distribution (5) sur un côté tourné vers la cavité (4) dans la deuxième position d'extrémité, une deuxième section d'extrémité de la tige (7, 8) étant guidée hors de la cavité (4) pour le couplage de la tige (7, 8) à un actionneur (10), le dispositif (1) présentant un joint d'étanchéité (11) pour l'étanchéification d'une zone du dispositif (1) recevant la deuxième section d'extrémité contre la cavité (4), le joint d'étanchéité (11) étant agencé dans la zone de la cavité (4), le joint d'étanchéité (11) entourant la tige (7, 8) de manière périphérique dans la zone de la cavité (4), le joint d'étanchéité (11) présentant une première section de joint d'étanchéité (12) et une deuxième section de joint d'étanchéité (13), la première section de joint d'étanchéité (12) étant reliée de manière fixe à la tige (7, 8) par rapport à la tige (7, 8) et la deuxième section de joint d'étanchéité (13) s'appuyant de manière fixe contre une paroi délimitant la cavité (4), le joint d'étanchéité (11) présentant une zone d'élasticité (14) entre la première section de joint d'étanchéité (12) et la deuxième section de joint d'étanchéité (13), le joint d'étanchéité (11) étant étiré dans la direction axiale (Z) dans la deuxième position d'extrémité de la tige (7, 8) par rapport à un état de base du joint d'étanchéité (11), **caractérisé en ce que** la zone d'élasticité (14) présente une première section d'appui (18) adjacente à la première section de joint d'étanchéité (12) et la tige (7, 8) présente une première section de glissement (19), la première section d'appui (18) étant en contact avec la première section de glissement (19), et/ou la zone d'élasticité (14) présente une deuxième section d'appui (20) adjacente à la deuxième section de joint d'étanchéité (13) et le dispositif (1) présente une section de paroi (22) entourant la tige (7, 8) de manière périphérique, la section de paroi (22) présentant une deuxième section de glissement (21), la deuxième section d'appui (20) étant en contact avec la deuxième section de glissement (21) sur un côté détourné de la tige (7, 8).

2. Dispositif (1) selon la revendication 1, dans lequel la première section de joint d'étanchéité (12) est reliée à la tige (7, 8) par liaison de matière.

3. Dispositif (1) selon la revendication 1 ou 2, dans lequel, sans l'action d'une force externe sur la tige (7, 8) et/ou sans l'action d'une force externe sur le joint d'étanchéité (11), la tige (7, 8) se trouve dans la première position d'extrémité ou, sans l'action d'une force externe sur la tige (7, 8) et/ou sans l'action d'une force externe sur le joint d'étanchéité (11), la tige (7, 8) se trouve entre la première position d'extrémité et la deuxième position d'extrémité.

4. Dispositif (1) selon la revendication 3, dans lequel le dispositif (1) présente des moyens (28, 29), les moyens (28, 29) exerçant une force externe sur la tige (7, 8) en direction de la deuxième position d'extrémité.

5. Dispositif (1) selon l'une quelconque des revendications 1 à 4, dans lequel le dispositif (1) présente plusieurs ouvertures d'entrée (6) débouchant dans la cavité (4), les ouvertures d'entrée (6) étant agencées de manière périphérique autour de la tige (7, 8).

6. Dispositif (1) selon la revendication 5, dans lequel les ouvertures d'entrée (6) sont agencées le long d'une circonférence de cercle d'un cercle, un plan de cercle du cercle étant réalisé perpendiculairement à la direction axiale (Z).

7. Dispositif (1) selon la revendication 5 ou 6, dans lequel le dispositif (1) présente un canal annulaire (15) pour l'amenée du milieu fluide vers les plusieurs ouvertures d'entrée (6), notamment le canal annulaire (15) entoure la tige (7, 8) de manière périphérique.

8. Dispositif (1) selon l'une quelconque des revendications 1 à 7, dans lequel la deuxième section de joint d'étanchéité (13) est réalisée sous forme de bride.

9. Dispositif (1) selon l'une quelconque des revendications 1 à 8, dans lequel le joint d'étanchéité (11) réalisé sous forme de joint d'étanchéité à soufflet.

10. Dispositif (1) selon l'une quelconque des revendications 1 à 9, dans lequel au moins une section partielle de la zone d'élasticité (14) du joint d'étanchéité (11) est agencée espacée de la tige (7, 8) dans une direction radiale.

11. Dispositif (1) selon l'une quelconque des revendications 1 à 10, dans lequel au moins une section partielle de la zone d'élasticité (14) fait saillie dans la direction radiale par rapport à la première section de joint d'étanchéité (12).

12. Dispositif (1) selon l'une quelconque des revendications 1 à 11, dans lequel le joint d'étanchéité (11) présente une épaisseur de paroi constante dans la zone d'élasticité (14).

13. Dispositif (1) selon l'une quelconque des revendications 1 à 12, dans lequel la zone d'élasticité (14) présente une courbure dans une section transversale plane du joint d'étanchéité (11) réalisée parallèlement à la direction axiale (Z), notamment la courbure de la zone d'élasticité (14) peut être décrite par une ligne médiane (17) de la section transversale de la zone d'élasticité (14), une courbure de la ligne médiane (17) étant continue, notamment la ligne médiane (17) pouvant être décrite par une section d'une fonction sinusoïdale quadratique.

14. Dispositif (1) selon l'une quelconque des revendications 1 à 13, dans lequel la tige (7, 8) est réalisée au moins en deux parties, une première partie de tige (7) présentant la section d'étanchéité (9), la première section de joint d'étanchéité (12) étant reliée à la première partie de tige (7) et/ou la première section de joint d'étanchéité (12) étant montée par serrage entre la première partie de tige (7) et la deuxième partie de tige (8).
